# EUROPEAN PATENT APPLICATION

(11) **EP 4 496 064 A1**
(43) Date of publication of application: **22.01.2025**
(21) Application number: 23825860.2
(22) Date of filing: 21.03.2023
(51) Int. Cl.: H01M 10/0587

(54) **ELECTRODE ASSEMBLY, BATTERY CELL, BATTERY AND ELECTRIC DEVICE**

(30) Priority: 23.06.2022 CN 202210716973
(71) Applicant: Contemporary Amperex Technology Co., Limited, Ningde, Fujian 352100 (CN)
(72) Inventor: CHANG, Wen, Ningde, Fujian 352100 (CN); FU, Chenghua, Ningde, Fujian 352100 (CN); GUO, Suogang, Ningde, Fujian 352100 (CN); YE, Yonghuang, Ningde, Fujian 352100 (CN)
(74) Representative: Holt, Lucy Rose
(86) International application number: PCT/CN2023/082834
(87) International publication number: WO 2023/246202

(57) **Abstract**

Disclosed in the embodiments of the present application are an electrode assembly, a battery cell, a battery and an electric device. The electrode assembly comprises a positive electrode sheet, a first separator, a negative electrode sheet and a second separator, and the positive electrode sheet, the first separator, the negative electrode sheet and the second separator are wound to form the electrode assembly, wherein the first separator and the second separator are configured to separate the positive electrode sheet from the negative electrode sheet; and a winding starting end of the negative electrode sheet, a winding starting end of the first separator and a winding starting end of the second separator are substantially aligned. The electrode assembly, the battery cell, the battery and the electric device provided in the embodiments of the present application can improve the electrode assembly processing efficiency.

## Description

### Cross-Reference to Related Application

The present application claims the priority of Chinese Patent Application No. 202210716973.X filed on June 23, 2022 and entitled "ELECTRODE ASSEMBLY, BATTERY CELL, BATTERY, AND ELECTRICAL DEVICE", which is incorporated herein by reference in its entirety.

### Technical Field

The present application relates to the technical field of batteries, and in particular, to an electrode assembly, a battery cell, a battery and an electrical device.

### Background

Energy conservation and emission reduction are key to sustainable development of the automobile industry. In this case, electric vehicles have become an important part of the sustainable development of the automobile industry because of their advantages of energy saving and environmental friendliness. For the electric vehicles, the battery technology is an important factor related to their development.

The overall production process of the battery is long and complicated, including a series of procedures such as coating, plate production, winding, assembling, laser welding, and liquid injection. The manufacturing process of an electrode assembly inside a battery cell is particularly important, which will directly affect the manufacturing efficiency and performance of the battery cell. Therefore, how to improve the manufacturing efficiency of the electrode assembly is a technical problem to be solved urgently.

### Summary of the Invention

Embodiments of the present application provide an electrode assembly, a battery cell, a battery and an electrical device, which improve the manufacturing efficiency of the electrode assembly.

In a first aspect, provided is an electrode assembly, including: a positive electrode plate, a first separator, a negative electrode plate and a second separator, the positive electrode plate, the first separator, the negative electrode plate and the second separator being wound to form the electrode assembly, wherein the first separator and the second separator are configured to isolate the positive electrode plate from the negative electrode plate, and a winding start end of the negative electrode plate, a winding start end of the first separator and a winding start end of the second separator are substantially aligned with one another.

Therefore, the embodiments of the present application provide an electrode assembly, which includes a positive electrode plate, a first separator, a negative electrode plate, and a second separator, wherein a winding start end of the negative electrode plate, a winding start end of the first separator and a winding start end of the second separator are substantially aligned with one another. In this way, compared with the conventional electrode assembly, when the electrode assembly of the embodiments of the present application is initially wound, the negative electrode plate can be initially wound simultaneously with the first separator and the second separator, and it is not necessary to delay the feeding of the negative electrode plate by friction, so that not only can the time interval caused by the need to delay the feeding of the negative electrode plate be reduced, but the problems of deflection and folding of the initially wound head that may occur when the feeding of the negative electrode plate is delayed by friction can also be avoided, thereby further improving the manufacturing efficiency of the electrode assembly.

In some embodiments, along a winding direction of the electrode assembly, a winding start end of the positive electrode plate is located downstream of the winding start end of the negative electrode plate, so as to avoid lithium plating.

In some embodiments, along the winding direction of the electrode assembly, a distance between the winding start end of the positive electrode plate and the winding start end of the negative electrode plate is greater than or equal to half a winding cycle and less than one winding cycle.

In this way, lithium plating can be effectively avoided, waste caused by too long negative electrode plates can be avoided, and the energy density of the battery cell where the electrode assembly is located can also be increased.

In some embodiments, a winding terminal end of the negative electrode plate, a winding terminal end of the first separator and a winding terminal end of the second separator are substantially aligned with one another.

When winding the electrode assembly, the winding process of the negative electrode plate, the first separator and the second separator can be ended by simultaneously cutting the negative electrode plate, the first separator and the second separator rather than first cutting the negative electrode plate and then cutting the first separator and the second separator, thereby saving the manufacturing time and improving the manufacturing efficiency of the electrode assembly.

In some embodiments, along the winding direction of the electrode assembly, a winding terminal end of the positive electrode plate is located upstream of the winding terminal end of the negative electrode plate, so as to avoid lithium plating.

In some embodiments, along the winding direction of the electrode assembly, the negative electrode plate includes a first corner, a planar area and a second corner in sequence, the first corner being the corner closest to the winding start end of the negative electrode plate. In this way, during the manufacturing of the electrode assembly, a winding needle can stably clamp and secure the negative electrode plate, the first separator and the second separator, thereby preventing the negative electrode plate from being displaced, which otherwise causes lithium plating.

In some embodiments, along the winding direction of the electrode assembly, a distance between the winding start end of the negative electrode plate and the first corner has a value range of [3 mm, 30 mm].

The distance between the winding start end of the negative electrode plate and the first corner should not be too small, to prevent the negative electrode plate from being displaced, which otherwise causes lithium plating, under the clamping action of the winding needle when the distance is too small. On the contrary, the distance between the winding start end of the negative electrode plate and the first corner should also not be too large, to avoid waste of the negative electrode plate when the distance is too large, which otherwise affects the energy density of the battery cell composed of the electrode assembly.

In some embodiments, along the winding direction of the electrode assembly, the winding start end of the positive electrode plate is located downstream of the second corner.

In this way, the distance between the winding start end of the positive electrode plate and the winding start end of the negative electrode plate is greater than half the winding cycle, so that lithium plating can be effectively avoided.

In some embodiments, along the winding direction of the electrode assembly, a distance between the winding start end of the positive electrode plate and the second corner has a value range of [3 mm, 30 mm].

The distance between the winding start end of the positive electrode plate and the second corner should not be too small, to avoid lithium plating in the area of the negative electrode plate corresponding to the winding start end of the positive electrode plate when the distance is too small. On the contrary, the distance between the winding start end of the positive electrode plate and the second corner should also not be set too large, to avoid that when the distance is too large, the length of the positive electrode plate is too small, resulting in waste of the negative electrode plate, which otherwise affects the energy density of the battery cell composed of the electrode assembly.

In some embodiments, in a radial direction of the electrode assembly and outwardly from a winding axis of the electrode assembly, the winding start end of the positive electrode plate is located inside a connecting section of the negative electrode plate, wherein the connecting section of the negative electrode plate is at least a partial area of the negative electrode plate that is connected to the second corner and close to the second corner. Not only can lithium plating be avoided, but the length of the negative electrode plate can also be reduced as much as possible.

In some embodiments, the positive electrode plate includes a third corner and an inactive area, the inactive area including the third corner, wherein a surface of the inactive area facing the winding axis of the electrode assembly is provided with an insulating layer, or a positive electrode active material layer on the surface of the inactive area facing the winding axis of the electrode assembly fails.

In this way, within the range of the inactive area, the positive electrode plate cannot work normally, for example, it cannot generate lithium ions, so that it is possible to avoid lithium plating in the area of the negative electrode plate corresponding to the inactive area. For example, it is possible to avoid lithium plating at the corresponding corner of the negative electrode plate.

In some embodiments, along the winding direction of the electrode assembly, the third corner is the corner of the positive electrode plate closest to the winding axis of the electrode assembly.

The corner of the positive electrode plate closest to the winding axis of the electrode assembly has a greater possibility of being subjected to lithium plating than the other corners. Therefore, the third corner may be the corner of the positive electrode plate closest to the winding axis of the electrode assembly, that is, the inactive area is only provided at the corner of the positive electrode plate closest to the winding axis of the electrode assembly, so that not only can lithium plating be avoided, but unnecessary waste of the electrode plate can also be avoided. Secondly, the range of the inactive area exceeds the third corner, that is, the inactive area can extend to the planar area connected to the third corner. In this way, if the first separator or the second separator at the winding start end of the negative electrode plate that is closer to the third corner shrinks, resulting in that a local area of the negative electrode plate is exposed, for example, the winding start end of the negative electrode plate may be exposed, then the inactive area can avoid short circuiting caused by overlap between the winding start end of the negative electrode plate and the positive electrode plate.

In some embodiments, along the winding direction of the electrode assembly, the length of the inactive area has a value range of [10 mm, 40 mm]. On the one hand, setting the length to be too long is avoided, which would result in waste of the positive electrode plate and the negative electrode plate, thereby reducing the energy density of the battery cell composed of the electrode assembly; on the other hand, setting the length to be too small is avoided, such that after the winding start end of the first separator or the winding start end of the second separator shrinks, short circuiting is caused between the exposed winding start end of the negative electrode plate and the positive electrode plate after overlapping each other.

In some embodiments, the electrode assembly further includes: a finishing adhesive configured to fix the winding terminal end of the negative electrode plate, the winding terminal end of the first separator and the winding terminal end of the second separator. The finishing adhesive is configured to fix the electrode assembly to avoid problems such as loosening and collapse of the electrode assembly.

In some embodiments, in the radial direction of the electrode assembly and outwardly from the winding axis of the electrode assembly, the winding terminal end of the negative electrode plate is located outside the winding terminal end of the first separator and the winding terminal end of the second separator, and along the winding direction of the electrode assembly, the finishing adhesive surrounds the outermost side of the negative electrode plate.

By arranging the finishing adhesive to surround the outermost side of the negative electrode plate, the negative electrode plate can be protected, and the positive electrode plate, the first separator and the second separator on the inner side can also be protected, thereby increasing the structural strength and the stability of the electrode assembly.

In some embodiments, the electrode assembly has an oblong cross-section along a first plane which is perpendicular to the winding axis of the electrode assembly.

In a second aspect, provided is a battery cell, including: an electrode assembly in the first aspect or according to any one of the embodiments in the first aspect.

In a third aspect, provided is a battery, including: a plurality of battery cells, each electrode cell including an electrode assembly in the first aspect or according to any one of the embodiments in the first aspect.

In a fourth aspect, provided is an electrical device, including: a battery, including an electrode assembly in the first aspect or according to any one of the embodiments in the first aspect.

In some embodiments, the electrical device is a vehicle, a ship or a spacecraft.

In a fifth aspect, provided is a method for preparing an electrode assembly, the method including: clamping a first separator, a negative electrode plate and a second separator by a winding needle, wherein the first separator and the second separator are configured to isolate a positive electrode plate from the negative electrode plate, and a winding start end of the negative electrode plate, a winding start end of the first separator and a winding start end of the second separator are substantially aligned with one another; and feeding the positive electrode plate, and winding the positive electrode plate, the first separator, the negative electrode plate and the second separator to form the electrode assembly, wherein along a winding direction of the electrode assembly, a winding start end of the positive electrode plate is located downstream of the winding start end of the negative electrode plate.

In a sixth aspect, provided is a device for preparing an electrode assembly, the device including modules for implementing the method in the foregoing fifth aspect.

### Description of Drawings

Fig. 1 is a schematic cross-sectional diagram of a conventional electrode assembly;
Fig. 2 is a schematic structural diagram of a vehicle disclosed in an embodiment of the present application;
Fig. 3 is a schematic structural diagram of an electrode assembly disclosed in an embodiment of the present application;
Figs. 4 to 7 are several schematic cross-sectional diagrams of an electrode assembly disclosed in an embodiment of the present application;
Figs. 8 and 9 are several schematic cross-sectional diagrams of a device for preparing an electrode assembly disclosed in an embodiment of the present application;
Fig. 10 is a schematic flow chart of a method for preparing an electrode assembly disclosed in an embodiment of the present application; and
Fig. 11 is a schematic block diagram of a device for preparing an electrode assembly disclosed in an embodiment of the present application.

In the accompanying drawings, the figures are not necessarily drawn to scale.

### Detailed Description

Technical solutions in the embodiments of the present application will be described below with reference to the accompanying drawings.

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated obj ects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, "a plurality of' means two or more (including two), similarly, "a plurality of groups" means two or more groups (including two groups), and "a plurality of sheets" means two or more sheets (including two sheets).

In the present application, battery cells may include lithium-ion secondary batteries, lithium-ion primary batteries, lithium-sulfur batteries, sodium/lithium-ion batteries, sodium-ion batteries or magnesium-ion batteries, etc., which are not limited by the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be polypropylene (PP), polyethylene (PE), etc. In addition, the electrode assembly may have a wound structure or a stacked structure, but the embodiments of the present application are not limited thereto.

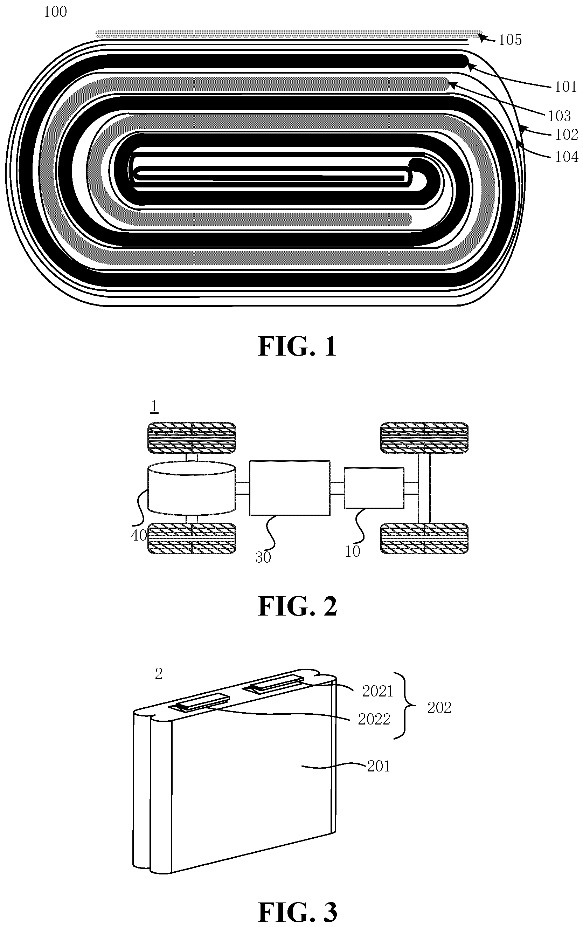

For an electrode assembly of a wound structure, the conventional manufacturing method usually has many disadvantages. Fig. 1 shows a schematic cross-sectional diagram of a conventional electrode assembly 100 of a wound structure. The cross-section is a cross-section perpendicular to the direction of a winding axis of the electrode assembly 100. As shown in Fig. 1, the conventional electrode assembly 100 includes a negative electrode plate 101, a first separator 102, a positive electrode plate 103 and a second separator 104. The first separator 102 and the second separator 104 are configured to isolate the positive electrode plate 103 from the negative electrode plate 101. Optionally, the electrode assembly 100 may further include a finishing adhesive 105. The finishing adhesive 105 is the outermost layer of the electrode assembly 100, for protecting its internal components.

As shown in Fig. 1, when the electrode assembly 100 is wound, a winding start end of the first separator 102 and a winding start end of the second separator 104 may be clamped by a clamping apparatus. The winding start end of the first separator 102 and the winding start end of the second separator 104 are substantially aligned with each other. After initially winding to a certain length, the negative electrode plate 101 and the positive electrode plate 103 of a preset length are respectively brought in by the friction of the first separator 102 and the second separator 104 for winding. After winding, the electrode assembly 100 is obtained.

This manufacturing method requires the winding of the positive electrode plate 103 and the negative electrode plate 101 respectively caused by the friction of the first separator 102 and the second separator 104, so the initial winding speed and acceleration should not be too large, otherwise the winding efficiency will be affected. A time interval between the feeding of the positive electrode plate 103 and the feeding of the negative electrode plate 101 and a time interval between final cuttings thereof will also increase the winding time of the electrode assembly, thereby affecting the winding efficiency of the electrode assembly.

Therefore, the embodiments of the present application provide an electrode assembly, which includes a positive electrode plate, a first separator, a negative electrode plate, and a second separator, wherein a winding start end of the negative electrode plate, a winding start end of the first separator and a winding start end of the second separator are substantially aligned with one another. In this way, compared with the conventional electrode assembly 100 shown in Fig. 1, when the electrode assembly of the embodiments of the present application is initially wound, the negative electrode plate can be initially wound simultaneously with the first separator and the second separator, and it is not necessary to delay the feeding of the negative electrode plate by friction, so that not only can the time interval caused by the need to delay the feeding of the negative electrode plate be reduced, but the problems of deflection and folding of the initially wound head that may occur when the feeding of the negative electrode plate is delayed by friction can also be avoided, thereby further improving the manufacturing efficiency of the electrode assembly.

The technical solutions described in the embodiments of the present application are applicable to various electrical devices using batteries.

The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

For example, Fig. 2 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

The battery 10 may include a box, and the inside of the box is a hollow structure. The hollow structure may be configured to receive a plurality of battery cells. Depending on different power requirements, the number of battery cells in the battery 10 may be set to any value. A plurality of battery cells may be in series, parallel or series-parallel connection to achieve a larger capacity or power. Since there may be many battery cells included in each battery 10, the battery cells may be arranged in groups for convenience of installation, and each group of battery cells constitute a battery module. The number of battery cells included in the battery module is not limited, and may be set according to requirements, and these battery modules may be in series, parallel or series-parallel connection.

Optionally, the battery 10 may further include other structures, which will not be described in detail herein. For example, the battery 10 may further include a bus component. The bus component is configured to implement the electrical connection between the plurality of battery cells, such as parallel connection, series connection or series-parallel connection. Specifically, the bus component may implement the electrical connection between the battery cells by connecting electrode terminals of the battery cells. Further, the bus component may be fixed to the electrode terminals of the battery cells by welding. Electric energy of the plurality of battery cells may be further led out through an electrically conductive mechanism penetrating the box.

The battery cell in the embodiments of the present application may include an outer shell and an inner electrode assembly. The shell may be of a hollow structure, which is configured to receive the electrode assembly. A battery cell may be provided with one or more electrode assemblies according to the actual application. The electrode assembly is a component of a battery cell where an electrochemical reaction occurs. The electrode assembly may be a cylinder, a cuboid, etc., and the shell of the battery cell may be correspondingly shaped according to the shape of the electrode assembly.

For example, Fig. 3 shows a schematic structural diagram of an electrode assembly 2 according to an embodiment of the present application. In Fig. 3, two electrode assemblies 2 are taken as an example. As shown in Fig. 3, the electrode assembly 2 includes tabs 202 and a main body 201 connected to each other. The main body 201 includes a positive electrode plate and a negative electrode plate, and the tabs 202 of the electrode assembly 2 may include a positive tab 2021 and a negative tab 2022. Specifically, the main body 201 may be formed by stacking or winding the positive electrode plate coated with a positive electrode active material layer and the negative electrode plate coated with a negative electrode active material layer; and the positive tab 2021 may be formed by stacking parts that protrude from the positive electrode plate and are not coated with the positive electrode active material layer, and the negative tab 2022 may be formed by stacking parts that protrude from the negative electrode plate and not coated with the negative electrode active material layer.

Optionally, for a plurality of electrode assemblies 2 included in the battery cell, the tabs 202 of the plurality of electrode assemblies 2 may be connected to each other. As shown in Fig. 3, the positive tabs 2021 of the two electrode assemblies 2 may be electrically connected to each other, and the negative tabs 2021 of the two electrode assemblies 2 may also be electrically connected to each other, so that the plurality of electrode assemblies 2 correspondingly include one positive tab 2021 and one negative tab 2022, but the embodiments of the present application are not limited thereto.

The battery cell is further provided with electrode terminals, which are configured for electrical connection with the electrode assembly 2 to output electric energy from the battery cell. The electrode terminals may include a positive electrode terminal and a negative electrode terminal. The positive electrode terminal is configured for electrical connection with the positive tab 2021, and the negative electrode terminal is configured for electrical connection with the negative tab 2022. The positive electrode terminal may be connected directly or indirectly to the positive tab 2021, and the negative electrode terminal may be connected directly or indirectly to the negative tab 2022. Illustratively, the positive electrode terminal is electrically connected to the positive tab 2021 via a connecting member, and the negative electrode terminal is electrically connected to the negative tab 2022 via a connecting member.

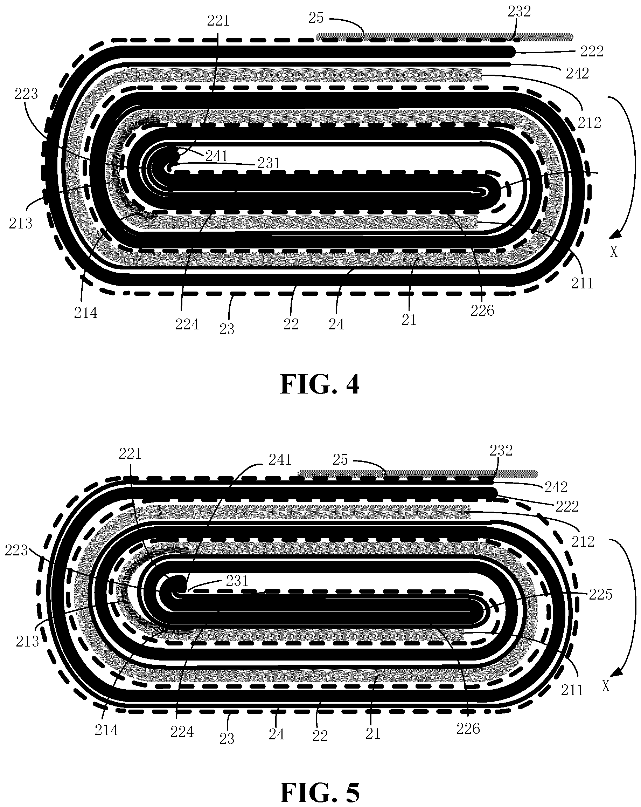

The electrode assembly 2 of the embodiments of the present application will be described in detail below with reference to the accompanying drawings. Figs. 4 to 7 respectively show several possible schematic cross-sectional diagrams of the electrode assembly 2 according to an embodiment of the present application. For example, the electrode assembly 2 shown in Figs. 4 to 7 may be several possible cross-sectional diagrams of any electrode assembly 2 shown in Fig. 3, specifically, may be several possible cross-sectional diagrams of the main body 201 of the electrode assembly 2 shown in Fig. 3. The cross-sections shown in Figs. 4 to 7 are cross-sections along the same direction, and the cross-sections are planes perpendicular to the direction of the winding axis of the electrode assembly 2.

As shown in Figs. 4 to 7, the electrode assembly 2 of the embodiment of the present application includes: a positive electrode plate 21, a first separator 23, a negative electrode plate 22 and a second separator 24. The positive electrode plate 21, the first separator 23, the negative electrode plate 22 and the second separator 24 are wound to form the electrode assembly 2. The first separator 23 and the second separator 24 are configured to isolate the positive electrode plate 21 from the negative electrode plate 22, and a winding start end 221 of the negative electrode plate 22, a winding start end 231 of the first separator 23 and a winding start end 241 of the second separator 24 are substantially aligned with one another.

Optionally, the electrode assembly 2 of the embodiment of the present application may be shaped according to actual applications. Specifically, the shape of the electrode assembly 2 mainly refers to the shape of the main body 201 of the electrode assembly 2. For example, the shape of the main body 201 may be a cylinder, or may be other shapes. For the convenience of description, in the embodiments of the present application, the shape shown in Figs. 3 to 7 is mainly taken as an example. The cross-section of the main body 201 of the electrode assembly 2 is approximately oblong, that is, the cross-section of the electrode assembly 2 along a first plane is oblong. The first plane is perpendicular to the winding axis of the electrode assembly 2, and the main body 201 is cylindrical as a whole, but the embodiments of the present application are not limited thereto.

It should be understood that the positive electrode plate 21 and the negative electrode plate 22 in the embodiments of the present application refer to parts of the main body 201 of the electrode assembly 2. Specifically, the positive electrode plate 21 does not include the positive tab 2021, the positive electrode plate 21 is formed by coating a positive electrode active material layer on a surface of a positive electrode current collector, the positive electrode current collector not coated with the positive electrode active material layer protrudes from the positive electrode current collector that has been coated with the positive electrode active material layer, and the positive electrode current collector not coated with the positive electrode active material layer is serves as the positive tab 2021. The positive electrode plate 21 is connected to the positive tab 2021. Similarly, the negative electrode plate 22 in the embodiments of the present application does not include the negative tab 2022, that is, the negative electrode plate 22 is formed by coating a negative electrode active material layer on a surface of a negative electrode current collector, and the negative electrode current collector not coated with the negative electrode active material layer protrudes from the negative electrode current collector that has been coated with the negative electrode active material layer, and the negative electrode current collector not coated with the negative electrode active material layer serves as the negative tab 2022. The negative electrode plate 22 is connected to the negative tab 2022. For the sake of brevity, no further details will be given below.

The first separator 23 and the second separator 24 in the embodiments of the present application are both used to isolate the positive electrode plate 21 from the negative electrode plate 22, but the present application does not limit the arrangement positions and order of the first separator 23 and the second separator 24. Specifically, as shown in Figs. 4 to 7, at any position of the electrode assembly 2, the first separator 23 and/or the second separator 24 may be arranged between the positive electrode plate 21 and the negative electrode plate 22, so that at any position of the electrode assembly 2, the positive electrode plate 21 and the negative electrode plate 22 are not in direct contact with each other, so as to avoid short circuiting.

It should be understood that, taking into account the influence of manufacturing errors and other factors, in the embodiments of the present application, multiple winding start ends or multiple winding terminal ends are substantially aligned. Specifically, the term "substantial alignment" is meant that the distance between the positions of multiple end points (e.g., end points of the multiple winding start ends, or end points of the multiple winding terminal ends) along the winding direction X of the electrode assembly 2 is less than or equal to a preset value. The preset value may be set to any value slightly greater than zero, in order to make the distance between the positions of the multiple end points along the winding direction X of the electrode assembly 2 approaches zero or is equal to zero. For example, by the winding start end 221 of the negative electrode plate 22, the winding start end 231 of the first separator 23 and the winding start end 241 of the second separator 24 being substantially aligned with one another, it is meant that the distance between the end points of every two winding start ends of the three winding start ends along the winding direction X of the electrode assembly 2 is less than or equal to a preset value, so that the distance between the end points of every two winding start ends of the three winding start ends along the winding direction X of the electrode assembly 2 is approximately equal to zero.

Therefore, the embodiments of the present application provide an electrode assembly 2. The electrode assembly 2 includes a positive electrode plate 21, a first separator 23, a negative electrode plate 22, and a second separator 24. A winding start end 221 of the negative electrode plate 22, a winding start end 231 of the first separator 23 and a winding start end 241 of the second separator 24 are substantially aligned with one another. In this way, compared with the conventional electrode assembly 100 shown in Fig. 1, when the electrode assembly 2 of the embodiments of the present application is initially wound, the negative electrode plate 22 can be initially wound simultaneously with the first separator 23 and the second separator 24, and it is not necessary to delay the feeding of the negative electrode plate 22 by friction, so that not only can the time interval caused by the need to delay the feeding of the negative electrode plate 22 be reduced, but the problems of deflection and folding of the initially wound head that may occur when the feeding of the negative electrode plate 22 is delayed by friction can also be avoided, thereby further improving the manufacturing efficiency of the electrode assembly 2.

Optionally, as shown in Figs. 4 to 7, along the winding direction X of the electrode assembly 2, a winding start end 211 of the positive electrode plate 21 is located downstream of the winding start end 221 of the negative electrode plate 22, so as to avoid lithium plating. Specifically, along the winding direction X of the electrode assembly 2, the winding start end 221 of the negative electrode plate 22, the winding start end 231 of the first separator 23 and the winding start end 241 of the second separator 24 are substantially aligned with one another, but the winding start end 211 of the positive electrode plate 21 and the winding start end 221 of the negative electrode plate 22 are not aligned with each other. After the negative electrode plate 22, the first separator 23 and the second separator 24 are initially wound for a certain distance, the positive electrode plate 21 is fed with a delay, so that the winding start end 211 of the positive electrode plate 21 is located downstream of the winding start end 221 of the negative electrode plate 22, thereby avoiding lithium plating. It should be understood that the term "downstream" herein means that the winding start end 211 of the positive electrode plate 21 is behind the winding start end 221 of the negative electrode plate 22 by a certain distance along the winding direction X of the electrode assembly 2.

It should be understood that where along the winding direction X of the electrode assembly 2, the winding start end 211 of the positive electrode plate 21 is located downstream of the winding start end 221 of the negative electrode plate 22, the specific position of the winding start end 211 of the positive electrode plate 21 should be set appropriately in order to avoid waste. Specifically, as shown in Figs. 4 to 7, along the winding direction X of the electrode assembly 2, a distance between the winding start end 211 of the positive electrode plate 21 and the winding start end 221 of the negative electrode plate 22 is greater than or equal to half a winding cycle and less than one winding cycle. In this way, lithium plating can be effectively avoided, waste caused by too long negative electrode plates 22 can be avoided, and the energy density of the battery cell where the electrode assembly 2 is located can also be increased.

It should be understood that the term "winding cycle" in the embodiments of the present application means that one rotation along the winding direction X of the electrode assembly 2 is one winding cycle. In addition, for different positions of the electrode assembly 2, the length of the electrode plate in one winding cycle may be different. For example, taking the negative electrode plate 22 as an example, along the winding direction X of the electrode assembly 2, for a position closer to the winding axis of the electrode assembly 2, the length of the negative electrode plate 22 in one winding cycle is greater than that for a position farther away from the winding axis of the electrode assembly 2. In the embodiments of the present application, if the distance between the winding start end 211 of the positive electrode plate 21 and the winding start end 221 of the negative electrode plate 22 is greater than one winding cycle, that is, after the negative electrode plate 22 starts to be wound, the positive electrode plate 21 does not start to be wound until the negative electrode plate rotates for more than one revolution, which will cause waste of the negative electrode plate 22.

In the embodiments of the present application, correspondingly to the winding start ends, as shown in Figs. 4 to 7, a winding terminal end 222 of the negative electrode plate 22, a winding terminal end 232 of the first separator 23 and a winding terminal end 242 of the second separator 24 are substantially aligned with one another in the embodiments of the present application. When winding the electrode assembly 2, the winding process of the negative electrode plate 22, the first separator 23 and the second separator 24 can be ended by simultaneously cutting the negative electrode plate 22, the first separator 23 and the second separator 24 rather than first cutting the negative electrode plate 22 and then cutting the first separator 23 and the second separator 24, thereby saving the manufacturing time and improving the manufacturing efficiency of the electrode assembly 2.

Optionally, as shown in Figs. 4 to 7, along the winding direction X of the electrode assembly 2, a winding terminal end 212 of the positive electrode plate 21 is located upstream of the winding terminal end 222 of the negative electrode plate 22, so as to avoid lithium plating. Specifically, along the winding direction X of the electrode assembly 2, the winding terminal end 222 of the negative electrode plate 22, the winding terminal end 232 of the first separator 23 and the winding terminal end 242 of the second separator 24 are substantially aligned with one another, but the winding terminal end 212 of the positive electrode plate 21 and the winding terminal end 222 of the negative electrode plate 22 are not aligned with each other. Before cutting the negative electrode plate 22, the positive electrode plate 21 is first cut, and then the negative electrode plate 22, the first separator 23 and the second separator 24 are cut, so that the winding terminal end 212 of the positive electrode plate 21 is located upstream of the winding terminal end 222 of the negative electrode plate 22, so as to avoid lithium plating. It should be understood that the term "upstream" herein means that the winding terminal end 212 of the positive electrode plate 21 is located in front of the winding terminal end 222 of the negative electrode plate 22 along the winding direction X of the electrode assembly 2, and is at a certain distance ahead of the winding terminal end 222 of the negative electrode plate 22.

It should be understood that where along the winding direction X of the electrode assembly 2, the winding terminal end 212 of the positive electrode plate 21 is located upstream of the winding terminal end 222 of the negative electrode plate 22, the length by which the winding terminal end 222 of the negative electrode plate 22 exceeds the winding terminal end 211 of the positive electrode plate 21 should be reasonably set, so as to avoid waste of the negative electrode plate 22 while avoiding lithium plating.

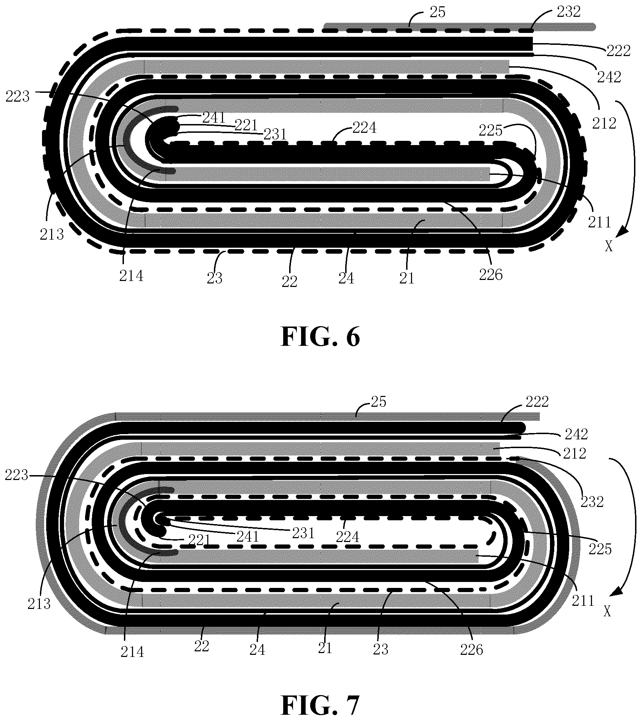

In the embodiments of the present application, by adjusting the relative positions of the positive electrode plate 21, the negative electrode plate 22, the first separator 23 and the second separator 24, different winding methods can be used to obtain different electrode assemblies 2. For example, among the four electrode assemblies 2 shown in Figs. 4 to 7, the relative positions of the positive electrode plate 21, the negative electrode plate 22, the first separator 23 and the second separator 24 are slightly different, and the corresponding forms of the electrode assemblies 2 are also different. Moreover, based on a comparison of Figs. 4 to 7, it can be seen that where lithium plating can likewise be avoided, along the winding direction X of the electrode assembly 2, the length difference between the positive electrode plate 21 and the negative electrode plate 22 in the electrode assemblies 2 shown in Figs. 6 and 7 is less than the length difference between the positive electrode plate 21 and the negative electrode plate 22 of the electrode assemblies 2 in Figs. 4 and 5. Therefore, the energy density of the battery cell composed of the electrode assembly 2 in Figs. 4 and 5 is smaller. That is, the battery cell composed of the electrode assembly 2 shown in Figs. 6 and 7 can achieve a higher energy density.

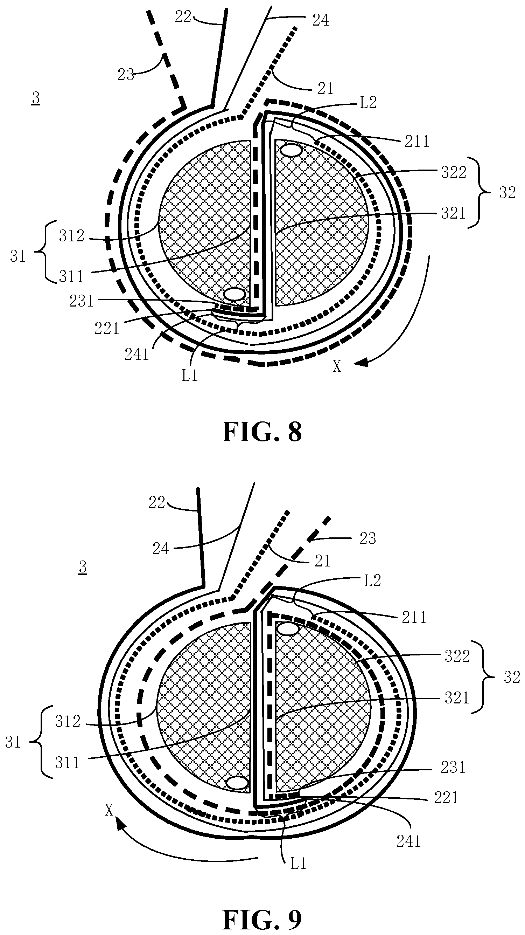

For the convenience of description, the following is described by mainly taking the electrode assembly 2 shown in Figs. 6 and 7 as an example, but the embodiments of the present application are not limited thereto. Correspondingly, Figs. 8 and 9 each show a schematic cross-sectional diagram of a device 3 for preparing an electrode assembly according to an embodiment of the present application. The direction of the cross-section is consistent with the direction of the cross-section shown in Figs. 4 to 7, that is, perpendicular to the winding axis of the electrode assembly 2. The electrode assembly 2 shown in Fig. 6 may be manufactured by the device 3 shown in Fig. 8 and using the winding and manufacturing method shown in Fig. 8; and the electrode assembly 2 shown in Fig. 7 may be manufactured by the device 3 shown in Fig. 9 and using the winding and manufacturing method shown in Fig. 9.

As shown in Figs. 8 and 9, the electrode assemblies 2 of the embodiments of the present application can be prepared by device 3. The device 3 includes a winding needle, which includes a first component 31 and a second component 32. Specifically, in order to manufacture a uniform and symmetrical electrode assembly 2, the cross-sectional shapes of the first component 31 and the second component 32 in the embodiments of the present application are the same. For example, the cross-section of the first component 31 is semicircular, and the cross-section of the second component 32 is also semicircular.

The two components of the winding needle in the embodiments of the present application each include a planar area and an arc-shaped area. Specifically, as shown in Figs. 8 and 9, the semicircular first component 31 includes a first planar area 311 and a first arc-shaped area 312. Similarly, the semicircular second component 32 includes a second planar area 321 and a second arc-shaped area 322. The first planar area 311 of the first component 31 faces the second planar area 321 of the second component 32, so that the first arc-shaped area 312 and the second arc-shaped area 322 of the winding needle substantially form a complete circle, that is, the winding needle is cylindrical.

It should be understood that the first planar area 311 and the second planar area 321 in the embodiment of the present application are smooth and straight surfaces; and the first arc-shaped area 312 and the second arc-shaped area 322 are also smooth surfaces. Therefore, the first component 31 and the second component 32 will substantially not cause mechanical hard damage to the positive electrode plate 21 and the negative electrode plate 22 of the electrode assembly 2, so that the manufacturing yield of the electrode assembly 2 can be increased.

In the embodiments of the present application, along the winding direction X of the electrode assembly 2, the negative electrode plate 22 includes a first corner 223, a planar area 224 and a second corner 225 in sequence. The first corner 223 is the corner closest to the winding start end 221 of the negative electrode plate 22. Specifically, when manufacturing the electrode assembly 2, as shown in Figs. 6 to 9, the winding start end 221 of the negative electrode plate 22, the winding start end 231 of the first separator 23 and the winding start end 241 of the second separator 24 are substantially aligned with one another, and the negative electrode plate 22, the first separator 23 and the second separator 24 are clamped between the first planar area 311 and the second planar area 321 to facilitate the start of winding.

It should be understood that in order to enable the first component 31 and the second component 32 to stably clamp and secure the negative electrode plate 22, the first separator 23 and the second separator 24, so as to prevent the negative electrode plate 22 from being displaced, which otherwise causes lithium plating, when manufacturing the electrode assembly 2, the winding start end 221 of the negative electrode plate 22 generally extends beyond the first planar area 311 and the second planar area 321, or in other words, along the winding direction X of the electrode assembly 2, the clamped area of the negative electrode plate 22 has a preset distance from the winding start end 221 of the negative electrode plate 22. That is, the winding start end 221 of the negative electrode plate 22 is generally located in the first arc-shaped area 312 or in the second arc-shaped area 322. Correspondingly, the winding start end 231 of the first separator 23 and the winding start end 241 of the second separator 24 are also located in the first arc-shaped area 312 or in the second arc-shaped area 322. Therefore, the negative electrode plate 22 of the electrode assembly 2 obtained by winding in the above manner includes a first corner 223, a planar area 224 and a second corner 225 which are connected to one another. The planar area 224 corresponds to a portion of the negative electrode plate 22 that is clamped between the first planar area 311 and the second planar area 321, and the first corner 223 is located between the winding start end 221 of the negative electrode plate 22 and the planar area 224.

It should be understood that for the electrode assembly 2, along the winding direction X of the electrode assembly 2, the length of a distance L1 between the winding start end 221 of the negative electrode plate 22 and the first corner 223 may be set according to actual applications. For example, the distance L1 between the winding start end 221 of the negative electrode plate 22 and the first corner 223 has a value range of [3 mm, 30 mm]. That is to say, as shown in Figs. 6 to 9, along the winding direction X of the electrode assembly 2, the distance L1 by which the winding start end 221 of the negative electrode plate 22 exceeds the first planar area 311 should not be too small, generally greater than or equal to 3 mm, to prevent the negative electrode plate 22 from being displaced, which otherwise causes lithium plating, under the clamping action of the first component 31 and the second component 32 when the distance L1 is too small. On the contrary, along the winding direction X of the electrode assembly 2, the distance L1 by which the winding start end 221 of the negative electrode plate 22 exceeds the first planar area 311 should also not be too large, generally less than or equal to 30 mm, to avoid waste of the negative electrode plate 22 when the distance L1 is too large, which otherwise affects the energy density of the battery cell composed of the electrode assembly 2.

In the embodiment of the present application, in order to avoid lithium plating, the positive electrode plate 21 is generally not clamped between the first planar area 311 and the second planar area 321, that is, the winding start end 211 of the positive electrode plate 21 is located at an arc-shaped area of an outer surface of the winding needle. For example, in Figs. 8 and 9, the winding start end 211 of the positive electrode plate 21 is located in the second arc-shaped area 322 as an example. Specifically, as shown in Figs. 6 to 9, along the winding direction X of the electrode assembly 2, the winding start end 211 of the positive electrode plate 21 is located downstream of the second corner 225. In this way, the distance between the winding start end 211 of the positive electrode plate 21 and the winding start end 221 of the negative electrode plate 22 is greater than half the winding cycle, so that lithium plating can be effectively avoided.

It should be understood that along the winding direction X of the electrode assembly 2, the length of a distance L2 between the winding start end 211 of the positive electrode plate 21 and the second corner 225 may be set according to actual applications. For example, along the winding direction X of the electrode assembly 2, the distance L2 between the winding start end 211 of the positive electrode plate 21 and the second corner 225 has a value range of [3 mm, 30 mm]. That is to say, as shown in Figs. 6 to 9, along the winding direction X of the electrode assembly 2, in other words, along the first arc-shaped plane 312 or the second arc-shaped plane 321, the distance L2 of the positive electrode plate 21 from the first planar area 311 should not be too small, generally greater than or equal to 3 mm, to avoid lithium plating in the area of the negative electrode plate 22 corresponding to the winding start end 211 of the positive electrode plate 21 when the distance L2 is too small. On the contrary, the distance L2 should also not be set too large, generally less than or equal to 30 mm, to avoid waste of the negative electrode plate 22 due to the too small length of the positive electrode plate21 when the distance L2 is too large, which otherwise affects the energy density of the battery cell composed of the electrode assembly 2.

In the embodiment of the present application, in a radial direction of the electrode assembly 2 and outwardly from the winding axis of the electrode assembly 2, the winding start end 211 of the positive electrode plate 21 is located inside a connecting section 226 of the negative electrode plate 22. The connecting section 226 of the negative electrode plate 22 is at least a partial area of the negative electrode plate 22 that is connected to the second corner 225 and close to the second corner 225. Specifically, as shown in Figs. 6 to 9, the first planar area 311 and the second planar area 321 clamp the negative electrode plate 21 such that the negative electrode plate 21 forms a first corner 223, a first planar area 224 and a second corner 225 which are connected to one another; and along the winding direction X of the electrode assembly 2, connected to the second corner 225 is the connecting section 226 of the negative electrode plate 22.

In order to improve the utilization rate of the negative electrode plate 22, the winding start end 211 of the positive electrode plate 21 is closer to the first arc-shaped plane 312 the second arc-shaped plane 322 than the connecting section 226, that is, in the radial direction of the electrode assembly 2 and outwardly from the winding axis of the electrode assembly 2, or in the radial direction of the winding needle and outwardly from the outer surface of the winding needle, the winding start end 211 of the positive electrode plate 21 is located inside the negative electrode plate 22. In this way, not only can lithium plating be avoided, but the length of the negative electrode plate 22 can also be reduced as much as possible.

For example, in the radial direction of the electrode assembly 2 and outwardly from the winding axis of the electrode assembly 2, in the electrode assembly 2 shown in Figs. 4 and 5, the positive electrode plate 21 is located outside the negative electrode plate 22, whereas in the electrode assembly 2 shown in Figs. 6 and 7, the positive electrode plate 21 is located inside the negative electrode plate 22. It can be seen from the comparison that Figs. 4 to 7 can also avoid lithium plating, and along the winding direction X of the electrode assembly 2, the length of the positive electrode plate 21 is also substantially the same, but the length of the negative electrode plate 21 in Figs. 4 and 5 is greater than the length of the negative electrode plate 21 shown in Figs. 6 and 7. Therefore, the energy density of the battery cell composed of the electrode assembly 2 shown in Figs. 4 and 5 is less than the energy density of the battery cell composed of the electrode assembly 2 shown in Figs. 6 and 7. That is, the battery cell using the electrode assembly 2 shown in Figs. 6 and 7 has a higher energy density.

In the embodiments of the present application, during the manufacturing of the electrode assembly 2, the first component 31 and the second component 32 clamp the negative electrode plate 22, the first separator 23 and the second separator 24, and after the positive electrode plate 21 is fed with a delay, the first component 31 and the second component 32 rotate together as a whole, so that the positive electrode plate 21, the negative electrode plate 22, the first separator 23 and the second separator 24 are wound around the first arc-shaped plane 311 and the second arc-shaped plane 321, so as to form the wound electrode assembly 2. The winding direction of the electrode assembly 2 is opposite to the rotation direction of the first component 31 and the second component 32.

It should be understood that the overall cross-section of the first component 31 and the second component 32 in the embodiments of the present application is approximately circular, and the electrode assembly 2 correspondingly obtained by winding is also circular. Optionally, if it is necessary to obtain an oblong electrode assembly 2 as shown in Figs. 6 and 7, it can be obtained by extruding a circular electrode assembly 2. For the obtained electrode assembly 2 shown in Figs. 6 and 7, there may be a risk of lithium plating at a corner of the positive electrode plate 21. Therefore, an inactive area may be provided at the corner of the positive electrode plate 21 to avoid lithium plating.

Specifically, as shown in Figs. 6 to 9, the positive electrode plate 21 includes a third corner 213 and an inactive area 214. The inactive area 214 includes the third corner 213. A surface of the inactive area 214 facing the winding axis of the electrode assembly 2 is provided with an insulating layer, or the positive electrode active material layer on the surface of the inactive area 214 facing the winding axis of the electrode assembly 2 fails. In this way, within the range of the inactive area 214, the positive electrode plate 21 cannot work normally, that is, it cannot generate lithium ions, so that it is possible to avoid lithium plating in the area of the negative electrode plate 22 corresponding to the inactive area 214. For example, it is possible to avoid lithium plating at the corresponding corner of the negative electrode plate 22.

Optionally, the arrangement of the inactive area 214 may be selected according to actual applications. For example, before the positive electrode plate 21 is wound, the inactive area 214 may be provided at a corresponding position of the positive electrode plate 21, such that in the electrode assembly 2 after winding, the inactive area 214 of the positive electrode plate 21 can include a third corner 213. For example, an insulating layer may be provided on the surface of the inactive area 214 facing the winding axis of the electrode assembly 2. For example, an insulating material may be sprayed, or an insulating adhesive may be adhered. For another example, the positive electrode active material layer on the surface of the inactive area 214 facing the winding axis of the electrode assembly 2 may be deactivated, such that the positive electrode active material layer on the surface of the inactive area 214 facing the winding axis of the electrode assembly 2 fails, but the embodiments of the present application are not limited thereto.

Optionally, along the winding direction X of the electrode assembly 2, the third corner 213 is the corner of the positive electrode plate 21 closest to the winding axis of the electrode assembly 2. As shown in Figs. 6 to 9, the corner of the positive electrode plate 21 closest to the winding axis of the electrode assembly 2 has a greater possibility of being subjected to lithium plating than the other corners. Therefore, the third corner 213 may be the corner of the positive electrode plate 21 closest to the winding axis of the electrode assembly 2, that is, the inactive area 214 is only provided at the corner of the positive electrode plate 21 closest to the winding axis of the electrode assembly 2. For example, the inactive area 214 generally faces the first corner 223 of the negative electrode plate 22. In this way, not only can lithium plating be avoided, but unnecessary waste of the electrode plate can also be avoided. Secondly, the inactive area 214 includes the third corner 213, that is, the range of the inactive area 214 exceeds the third corner 213, and the inactive area 214 then can extend to the planar area connected to the third corner 213. In this way, if the first separator 23 or the second separator 24 at the winding start end 221 of the negative electrode plate 22 that is closer to the third corner 213 shrinks, resulting in that a local area of the negative electrode plate 22 is exposed, for example, the winding start end 221 of the negative electrode plate 22 may be exposed, then the inactive area 214 can avoid short circuiting caused by overlap between the winding start end 221 of the negative electrode plate 22 and the positive electrode plate 21.

Optionally, along the winding direction X of the electrode assembly 2, the length of the inactive area 214 may be set according to actual applications. For example, along the winding direction X of the electrode assembly 2, the length of the inactive area 214 has a value range of [10 mm, 40 mm]. On the one hand, setting the length to be too long is avoided, which would result in waste of the positive electrode plate 21 and the negative electrode plate 22, thereby reducing the energy density of the battery cell composed of the electrode assembly 2; on the other hand, setting the length to be too small is avoided, such that after the winding start end 231 of the first separator 23 or the winding start end 241 of the second separator 24 shrinks, short circuiting is caused between the exposed winding start end 221 of the negative electrode plate 22 and the positive electrode plate 21 after overlapping each other. Therefore, the length of the inactive area 214 should not be too small, and the position of the inactive area 214 generally includes the position of the winding start end 221 of the negative electrode plate 22.

In the embodiments of the present application, the electrode assembly 2 further includes a finishing adhesive 25. The finishing adhesive 25 is configured to fix the winding terminal end 222 of the negative electrode plate 22, the winding terminal end 232 of the first separator 23 and the winding terminal end 242 of the second separator 24. The finishing adhesive 25 is provided on the outermost layer, that is, the finishing adhesive 25 constitutes at least part of the outer surface of the electrode assembly 2 for fixing the electrode assembly 2 to avoid problems such as loosening and collapse of the electrode assembly 2.

In the embodiments of the present application, in the radial direction of the electrode assembly 2 and outwardly from the winding axis of the electrode assembly 2, the winding terminal end 222 of the negative electrode plate 22 is located outside the winding terminal end 232 of the first separator 23 and the winding terminal end 242 of the second separator 24, and along the winding direction X of the electrode assembly 2, the finishing adhesive 25 surrounds the outermost side of the negative electrode plate 22. For example, as shown in Figs. 7 and 9, the winding terminal end 222 of the negative electrode plate 22, the winding terminal end 232 of the first separator 23 and the winding terminal end 242 of the second separator 24 of the electrode assembly 2 of the present application are substantially aligned with one another, that is, they can be cut at the same time, so it is possible that the winding terminal end 222 of the negative electrode plate 22 is located outside the winding terminal end 232 of the first separator 23 and the winding terminal end 242 of the second separator 24. Therefore, by arranging the finishing adhesive 25 to surround the outermost side of the negative electrode plate 22, the negative electrode plate 22 can be protected, and the positive electrode plate 21, the first separator 23 and the second separator 24 on the inner side can also be protected, thereby increasing the structural strength and the stability of the electrode assembly 2.

It should be understood that in the embodiments of the present application, the winding direction X of the electrode assembly 2 is mainly taken as an example to define the length relationship between the positive electrode plate 21, the negative electrode plate 22, the first separator 23 and the second separator 24. The height direction of the electrode assembly 2, that is, the width direction of each electrode plate and each separator, may be set according to actual applications. The height direction of the electrode assembly 2 is perpendicular to the cross-sections as shown in Figs. 4 to 6. For example, taking the height of the main body 201 of the electrode assembly 2 as an example, the width of the positive electrode plate 21 is generally greater than or equal to the width of the negative electrode plate 22 to avoid lithium plating; and the width of the first separator 23 and the width of the second separator 24 are generally greater than or equal to the width of the negative electrode plate 22 to avoid short circuiting, but the embodiments of the present application are not limited thereto.

It should be understood that the winding needle in the embodiments of the present application can be removed after the electrode assembly 2 is wound. Specifically, after the electrode assembly 2 is wound, the winding needle, that is, the first component 31 and the second component 32, can be removed from the electrode assembly 2 to obtain the manufactured electrode assembly 2.

Moreover, the electrode assembly 2 wound by the cylindrical winding needle including the first component 31 and the second component 32 as shown in Figs. 8 and 9 is a cylindrical electrode assembly 2. Further, the cylindrical electrode assembly 2 may be deformed by hot-pressing the electrode assembly 2 from which the winding needle has been removed. For example, the electrode assembly 2 may be hot-pressed to obtain the electrode assembly 2 as shown in Figs. 4 to 7, that is, the cross-section of the electrode assembly 2 is deformed from a circular shape to an oblong shape. Specifically, by hot-pressing the electrode assembly 2 in a direction perpendicular to the planar area of the original winding needle, or in a direction perpendicular to the planar area 224 of the negative electrode plate 22, the electrode assembly 2 as shown in Figs. 4 to 7 can be obtained. That is, the cross-section of the electrode assembly 2 is deformed from a circular shape to an oblong shape.

It should be understood that the embodiments of the present application provide an electrode assembly 2. The electrode assembly 2 includes a positive electrode plate 21, a first separator 23, a negative electrode plate 22, and a second separator 24. A winding start end 221 of the negative electrode plate 22, a winding start end 231 of the first separator 23 and a winding start end 241 of the second separator 24 are substantially aligned with one another. In this way, compared with the conventional electrode assembly 100 shown in Fig. 1, when the electrode assembly 2 of the embodiments of the present application is initially wound, the negative electrode plate 22 can be initially wound simultaneously with the first separator 23 and the second separator 24, and it is not necessary to delay the feeding of the negative electrode plate 22 by friction, so that not only can the time interval caused by the need to delay the feeding of the negative electrode plate 22 be reduced, but the problems of deflection and folding of the initially wound head that may occur when the feeding of the negative electrode plate 22 is delayed by friction can also be avoided, thereby further improving the manufacturing efficiency of the electrode assembly 2.

The following is described in detail with reference to particular examples.

In a first example, the electrode assembly 2 shown in Fig. 6 is taken as an example. Specifically, in this first example, the length of the negative electrode plate 22 of the electrode assembly 2 is equal to the lengths of both the first separator 23 and the second separator 24. Along the winding direction X of the electrode assembly 2, the distance between the winding start end 211 of the positive electrode plate 21 and the second corner 225 is 10 mm, and the distance between the winding terminal end 212 of the positive electrode plate 21 and the winding terminal end 222 of the negative electrode plate 22 is 10 mm; and the length of the inactive area 214 of the third corner 213 of the positive electrode plate 21 is 40 mm. In addition, in this first example, the number of layers of the positive electrode plate 21, the number of layers of the negative electrode plate 22, the number of layers of the first separator 23, the number of layers of the second separator 24 and the number of layers of the finishing adhesive 25 of the electrode assembly 2 are shown in Table 1 below. Furthermore, the thickness of a single layer of the positive electrode plate 21 is 0.1168 mm, and the thickness of a single layer of the negative electrode plate 22 is 0.1496 mm.

In a second example, the electrode assembly 2 shown in Fig. 7 is taken as an example. Specifically, in this second example, the length of the negative electrode plate 22 of the electrode assembly 2 is equal to the lengths of both the first separator 23 and the second separator 24. Along the winding direction X of the electrode assembly 2, the distance between the winding start end 211 of the positive electrode plate 21 and the second corner 225 is 10 mm, and the distance between the winding terminal end 212 of the positive electrode plate 21 and the winding terminal end 222 of the negative electrode plate 22 is 10 mm; and the length of the inactive area 214 of the third corner 213 of the positive electrode plate 21 is 40 mm. In addition, in this second example, the number of layers of the positive electrode plate 21, the number of layers of the negative electrode plate 22, the number of layers of the first separator 23, the number of layers of the second separator 24 and the number of layers of the finishing adhesive 25 of the electrode assembly 2 are shown in Table 1 below. Furthermore, the thickness of a single layer of the positive electrode plate 21 is 0.1165 mm, and the thickness of a single layer of the negative electrode plate 22 is 0.1492 mm.

In a third example, the electrode assembly 100 shown in Fig. 1 is taken as an example. Specifically, in this third example, the length of the first separator 102 and the length of the second separator 104 of the electrode assembly 100 are both greater than the length of the negative electrode plate 101, the winding start end of the positive electrode plate 103 and the winding start end of the negative electrode plate 101 are located at corners on the same side during feeding, and the distance between the winding start end of the positive electrode plate 103 and the respective corner exceeds the distance between the winding start end of the negative electrode plate 101 and the respective corner. An active layer of the negative electrode plate 101 on the innermost side is separated from the positive electrode plate 103 by one layer of a separator, and an active layer on the other side is separated by six layers of the separator from and corresponds to the other layer of the negative electrode plate 101; and after the negative electrode plate 101 is cut and finished, the two separators are wound with another six layers, and the length of the finishing adhesive 105 is consistent with that in the first example. Furthermore, the thickness of a single layer of the positive electrode plate 103 is 0.1168 mm, and the thickness of a single layer of the negative electrode plate 101 is 0.1496 mm.

It should be understood that the term "number of layers" in the embodiments of the present application relates to half a winding cycle. For example, one layer of the positive electrode plate 21 means that along the winding direction X of the electrode assembly 2, half a winding cycle is one layer, or one layer is between two adjacent corners of the positive electrode plate 21.

In addition, in the above three examples, the thickness of the single layer of the first separator and the thickness of the single layer of the second separator are both 0.012 mm; the thickness of the single layer of the finishing adhesive is 0.030 mm; the total circumference of an outer wall of the winding needle used for manufacturing is 260 mm; and a positive electrode slurry has a certain proportion, and a negative electrode slurry has a certain proportion.

**Table 1**

| Group | Number of layers of positive electrode plate | Number of layers of negative electrode plate | Total number of layers of first separator and second separator | Number of layers of finishing adhesive | PPM | VED |
|---|---|---|---|---|---|---|
| First example | 41 | 42 | 84 | 1 | 6 | 102.03% |
| Second example | 41 | 42 | 84 | 2 | 6 | 101.74% |
| Third example | 40 | 42 | 96 | 1 | 4 | 100% |

As shown in Table 1, "PPM" may represent the productivity of the electrode assembly, specifically the number of electrode assemblies per minute wound by each winding device, and "VED" represents the relative proportion of the volumetric energy density of the electrode assembly, where "VED" is a percentage relative to the third example, that is, the VED of the third example is set to 100%.

It can be seen from Table 1 that during the winding, the positive electrode plate 103, the negative electrode plate 101 and the two separators in the third example are respectively fed, finished and cut, which increases the production time. In the winding structure as shown in the third example, each device only produces four electrode assemblies 100 per minute. However, if the time intervals between feedings and final cuttings of the negative electrode plate and the two separators is eliminated, the productivity can be greatly increased. For example, in the first example and the second example, each device can produce six electrode assemblies 2 per minute, and the productivity thereof can be increased by 50% compared with the third example.

In addition, by adopting the winding methods of the first example and the second example, the innermost circle of the negative electrode plate 22 can also be used to increase the volumetric energy density of the electrode assembly 2 compared with the original winding method. For example, compared with the third example, the volumetric energy density of a single electrode assembly of the first example and the second example is increased by 2.03% and 1.74% respectively.

Therefore, the electrode assembly 2 of the embodiments of the present application can increase both the productivity and the energy density.

The electrode assembly 2 according to the embodiments of the present application are described above, and a method and device for preparing an electrode assembly 2 according to the embodiments of the present application will be described below. For the parts not described in detail, reference can be made to the foregoing embodiments.

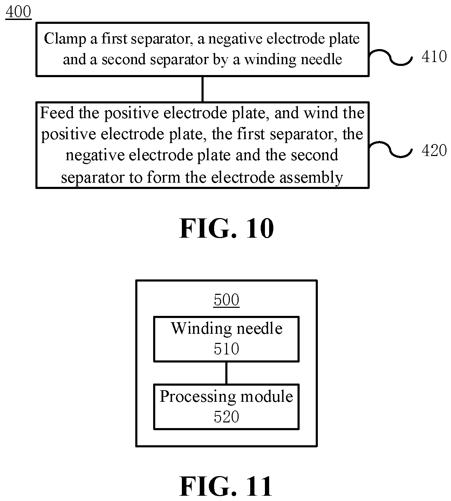

Fig. 10 shows a schematic flow chart of a method 400 for preparing an electrode assembly according to an embodiment of the present application. As shown in Fig. 10, the method 400 includes: a step S410 of clamping a first separator 23, a negative electrode plate 22 and a second separator 24 by a winding needle, where the first separator 23 and the second separator 24 are configured to isolate a positive electrode plate 21 from the negative electrode plate 22, and a winding start end 221 of the negative electrode plate 22, a winding start end 231 of the first separator 23 and a winding start end 241 of the second separator 24 are substantially aligned with one another; and a step S420 of feeding the positive electrode plate 21, and winding the positive electrode plate 21, the first separator 23, the negative electrode plate 22 and the second separator 24 to form the electrode assembly 2, where along a winding direction X of the electrode assembly 2, a winding start end 221 of the positive electrode plate 21 is located downstream of the winding start end 221 of the negative electrode plate 22.

Optionally, as an embodiment, in a radial direction of the winding needle and outwardly from an outer surface of the winding needle, the winding start end 211 of the positive electrode plate 21 is located inside the negative electrode plate 22.

Optionally, as an embodiment, along the winding direction X of the electrode assembly 2, a clamped area of the negative electrode plate 22 has a preset distance from the winding start end 221 of the negative electrode plate 22.

Optionally, as an embodiment, the method 400 further includes: providing an inactive area 214 on the positive electrode plate 21 such that the inactive area 214 faces a portion between the clamped area of the negative electrode plate 22 and the winding start end 221 of the negative electrode plate 22. Providing an inactive area 214 on the positive electrode plate 21 includes: providing an insulating layer on a partial area of a surface of the positive electrode plate 21 facing the winding needle to form the inactive area 214, or performing a failure treatment on a partial area of a positive electrode active material layer on the surface of the positive electrode plate 21 facing the winding needle to form the inactive area 214.

Optionally, as an embodiment, along the winding direction X of the electrode assembly 2, the length of the inactive area 214 has a value range of [10 mm, 40 mm].

Optionally, as an embodiment, the method 400 further includes: removing the winding needle from the electrode assembly 2 after completing the winding of the electrode assembly 2.

Optionally, as an embodiment, the method 400 further includes: hot-pressing the electrode assembly 2 from which the winding needle has been removed, such that the electrode assembly 2 has an oblong cross-section along a first plane which is perpendicular to a winding axis of the electrode assembly 2.

Fig. 11 shows a schematic block diagram of a device 500 for preparing an electrode assembly according to an embodiment of the present application. As shown in Fig. 11, the device 500 includes a winding needle 510. The winding needle 510 is configured to clamp a first separator 23, a negative electrode plate 22 and a second separator 24. The first separator 23 and the second separator 24 are configured to isolate a positive electrode plate 21 from the negative electrode plate 22, and a winding start end 221 of the negative electrode plate 22, a winding start end 231 of the first separator 23 and a winding start end 241 of the second separator 24 are substantially aligned with one another. The winding needle 510 is further configured to feed the positive electrode plate 21, and winding the positive electrode plate 21, the first separator 23, the negative electrode plate 22 and the second separator 24 to form the electrode assembly 2. Along a winding direction X of the electrode assembly 2, a winding start end 221 of the positive electrode plate 21 is located downstream of the winding start end 221 of the negative electrode plate 22.

Optionally, as an embodiment, in a radial direction of the winding needle and outwardly from an outer surface of the winding needle, the winding start end 211 of the positive electrode plate 21 is located inside the negative electrode plate 22.

Optionally, as an embodiment, along the winding direction X of the electrode assembly 2, a clamped area of the negative electrode plate 22 has a preset distance from the winding start end 221 of the negative electrode plate 22.

Optionally, as an embodiment, the device 500 further includes a processing module 520. The processing module 520 is configured to provide an inactive area 214 on the positive electrode plate 21 such that the inactive area 214 faces a portion between the clamped area of the negative electrode plate 22 and the winding start end 221 of the negative electrode plate 22. The processing module 520 may be specifically configured to: provide an insulating layer on a partial area of a surface of the positive electrode plate 21 facing the winding needle to form the inactive area 214, or to perform a failure treatment on a partial area of a positive electrode active material layer on the surface of the positive electrode plate 21 facing the winding needle to form the inactive area 214.

Optionally, as an embodiment, along the winding direction X of the electrode assembly 2, the length of the inactive area 214 has a value range of [10 mm, 40 mm].

Optionally, as an embodiment, the device 500 further includes a withdrawal module for removing the winding needle from the electrode assembly 2 after completing the winding of the electrode assembly 2.

Optionally, as an embodiment, the device 500 further includes a hot-pressing module for hot-pressing the electrode assembly 2 from which the winding needle has been removed, such that the electrode assembly 2 has an oblong cross-section along a first plane which is perpendicular to a winding axis of the electrode assembly 2.

It should be understood that the method 400 and the device 500 for preparing an electrode assembly according to the embodiments of the present application can be used to prepare the electrode assembly 2 according to the embodiments of the present application, and will not be described again here for the sake of brevity.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An electrode assembly, comprising: a positive electrode plate, a first separator, a negative electrode plate and a second separator, the positive electrode plate, the first separator, the negative electrode plate and the second separator being wound to form the electrode assembly,
wherein the first separator and the second separator are configured to isolate the positive electrode plate from the negative electrode plate, and
a winding start end of the negative electrode plate, a winding start end of the first separator and a winding start end of the second separator are substantially aligned with one another.

2. The electrode assembly according to claim 1, wherein along a winding direction of the electrode assembly, a winding start end of the positive electrode plate is located downstream of the winding start end of the negative electrode plate.

3. The electrode assembly according to claim 2, wherein along the winding direction of the electrode assembly, a distance between the winding start end of the positive electrode plate and the winding start end of the negative electrode plate is greater than or equal to half a winding cycle and less than one winding cycle.

4. The electrode assembly according to any one of claims 1 to 3, wherein a winding terminal end of the negative electrode plate, a winding terminal end of the first separator and a winding terminal end of the second separator are substantially aligned with one another.

5. The electrode assembly according to claim 4, wherein along the winding direction of the electrode assembly, a winding terminal end of the positive electrode plate is located upstream of the winding terminal end of the negative electrode plate.

6. The electrode assembly according to any one of claims 1 to 5, wherein along the winding direction of the electrode assembly, the negative electrode plate comprises a first corner, a planar area and a second corner in sequence, the first corner being the corner closest to the winding start end of the negative electrode plate.

7. The electrode assembly according to claim 6, wherein along the winding direction of the electrode assembly, a distance between the winding start end of the negative electrode plate and the first corner has a value range of [3 mm, 30 mm].

8. The electrode assembly according to claim 6 or 7, wherein along the winding direction of the electrode assembly, the winding start end of the positive electrode plate is located downstream of the second corner.

9. The electrode assembly according to claim 8, wherein along the winding direction of the electrode assembly, a distance between the winding start end of the positive electrode plate and the second corner has a value range of [3 mm, 30 mm].

10. The electrode assembly according to any one of claims 6 to 9, wherein in a radial direction of the electrode assembly and outwardly from a winding axis of the electrode assembly, the winding start end of the positive electrode plate is located inside a connecting section of the negative electrode plate,
wherein the connecting section of the negative electrode plate is at least a partial area of the negative electrode plate that is connected to the second corner and close to the second corner.

11. The electrode assembly according to any one of claims 6 to 10, wherein the positive electrode plate comprises a third corner and an inactive area, the inactive area comprising the third corner,
wherein a surface of the inactive area facing the winding axis of the electrode assembly is provided with an insulating layer, or a positive electrode active material layer on the surface of the inactive area facing the winding axis of the electrode assembly fails.

12. The electrode assembly according to claim 11, wherein along the winding direction of the electrode assembly, the third corner is the corner of the positive electrode plate closest to the winding axis of the electrode assembly.

13. The electrode assembly according to claim 11 or 12, wherein along the winding direction of the electrode assembly, the length of the inactive area has a value range of [10 mm, 40 mm].

14. The electrode assembly according to any one of claims 1 to 13, further comprising:
a finishing adhesive configured to fix the winding terminal end of the negative electrode plate, the winding terminal end of the first separator and the winding terminal end of the second separator.

15. The electrode assembly according to claim 14, wherein in the radial direction of the electrode assembly and outwardly from the winding axis of the electrode assembly, the winding terminal end of the negative electrode plate is located outside the winding terminal end of the first separator and the winding terminal end of the second separator, and
along the winding direction of the electrode assembly, the finishing adhesive surrounds the outermost side of the negative electrode plate.

16. The electrode assembly according to any one of claims 1 to 15, wherein the electrode assembly has an oblong cross-section along a first plane which is perpendicular to the winding axis of the electrode assembly.

17. A battery cell, comprising:
the electrode assembly of any one of claims 1 to 16.

18. A battery, comprising:
a plurality of battery cells, each comprising the electrode assembly of any one of claims 1 to 16.

19. An electrical device, comprising:
a battery, comprising the electrode assembly of any one of claims 1 to 16, wherein the battery is configured to supply electric energy.

20. A method for preparing an electrode assembly, the method comprising steps of:
clamping a first separator, a negative electrode plate and a second separator by a winding needle, wherein the first separator and the second separator are configured to isolate a positive electrode plate from the negative electrode plate, and a winding start end of the negative electrode plate, a winding start end of the first separator and a winding start end of the second separator are substantially aligned with one another; and
feeding the positive electrode plate, and winding the positive electrode plate, the first separator, the negative electrode plate and the second separator to form the electrode assembly, wherein along a winding direction of the electrode assembly, a winding start end of the positive electrode plate is located downstream of the winding start end of the negative electrode plate.

21. The method according to claim 20, wherein in a radial direction of the winding needle and outwardly from an outer surface of the winding needle, the winding start end of the positive electrode plate is located inside the negative electrode plate.

22. The method according to claim 20 or 21, wherein along the winding direction of the electrode assembly, a clamped area of the negative electrode plate has a preset distance from the winding start end of the negative electrode plate.

23. The method according to claim 22, further comprising:
providing an inactive area on the positive electrode plate such that the inactive area faces a portion between the clamped area of the negative electrode plate and the winding start end of the negative electrode plate,
wherein providing an inactive area on the positive electrode plate comprises:
providing an insulating layer on a partial area of a surface of the positive electrode plate facing the winding needle to form the inactive area, or
performing a failure treatment on a partial area of a positive electrode active material layer on the surface of the positive electrode plate facing the winding needle to form the inactive area.

24. The method according to claim 23, wherein along the winding direction of the electrode assembly, the length of the inactive area has a value range of [10 mm, 40 mm].

25. The method according to any one of claims 20 to 24, further comprising:
removing the winding needle from the electrode assembly after completing the winding of the electrode assembly.

26. The method according to claim 25, further comprising:
hot-pressing the electrode assembly from which the winding needle has been removed, such that the electrode assembly has an oblong cross-section along a first plane which is perpendicular to a winding axis of the electrode assembly.
